# EUROPÄISCHE PATENTANMELDUNG

(11) **EP 0 936 191 A2**
(43) Veröffentlichungstag der Anmeldung: **18.08.1999**
(21) Anmeldenummer: 98123864.5
(22) Anmeldetag: 16.12.1998
(51) Int. Cl.: C02F 9/00

(54) **Anordnung zum Reinigen von Abwasser**

(30) Priorität: 17.12.1997 DE 29722114 U; 31.07.1998 DE 29813706 U
(71) Anmelder: Kaibel & Siebel GMBH, 67547 Worms (DE)
(72) Erfinder: Deibert, Ottmar, Dipl.-Ing., 67574 Osthofen (DE)
(74) Vertreter: Stoffregen, Hans-Herbert, Dr. Dipl.-Phys.

(57) **Zusammenfassung**

Die Erfindung bezieht sich auf eine Anordnung zum Reinigen von bei einem Verbraucher (10) wie insbesondere einer PKW-Waschanlage anfallendem Abwasser umfassend einen das Abwasser aufnehmenden ersten Behälter (12) zumindest einen gereinigtes bzw. vorgereinigtes Abwasser aufnehmenden zweiten Behälter (14), zumindest eine dem zweiten Behälter vorgeschaltete erste Reinigungseinrichtung (16) für das Abwasser, gegebenfalls eine Einrichtung (18) zum Erzeugen von Ozon zum Behandeln von Abwasser sowie zumindest ein erstes Förderaggregat (22) zum Fördern des Abwassers, wobei das in dem zweiten Behälter (14) angesammelte gereinigte bzw. vorgereinigte Abwasser unmittelbar oder mittelbar dem Verbraucher wieder zuführbar ist. Damit mit konstruktiv einfachen Maßnahmen und bei kompakter Bauart eine Reinigung von Abwasser erfolgen kann wird vorgeschlagen, dass das erste Förderaggregat (22) oder eine Ansaugstelle dieses im Bodenbereich (20) des ersten Behälters (12) angeordnet ist, dass von dem ersten Förderaggregat eine zu der Reinigungseinrichtung (15) führende erste Leitung (24) ausgeht, von der zumindest vorgereinigtes Abwasser in den zweiten Behälter gelangt, dass von dem zweiten Behälter eine in den Bodenbereich des ersten Behälters führende zweite Leitung (26) ausgeht, dass von dem zweiten Behälter eine dritte zu dem Verbraucher (10) führende Leitung (30) und/oder von dem ersten Behälter eine vierte Leitung (66) ausgeht, die in einem eine zweite Reinigungseinrichtung (62) aufweisenden Kreislauf (64) mündet, wobei von der zweiten Reinigungseinrichtung eine gereinigtes Wasser abführende fünfte Leitung (92) zu dem Verbraucher (10) führt.

## Beschreibung

Die Erfindung bezieht sich auf eine Anordnung zum Reinigen von bei einem Verbraucher wie insbesondere einer PKW-Waschanlage anfallendem Abwasser umfassend einen das Abwasser aufnehmenden ersten Behälter, zumindest einen gereinigtes bzw. vorgereinigtes Abwasser aufnehmenden zweiten Behälter, zumindest eine dem zweiten Behälter vorgeschaltete erste Reinigungseinrichtung für das Abwasser, gegebenenfalls eine Einrichtung zum Erzeugen von Ozon zum Behandeln von Abwasser sowie zumindest ein erstes Förderaggregat zum Fördern des Abwassers, wobei das in dem zweiten Behälter angesammelte gereinigte bzw. vorgereinigte Abwasser unmittelbar oder mittelbar dem Verbraucher wieder zuführbar ist.

Um das bei Kraftfahrzeugwaschanlagen anfallende und mit Waschmittlen und Öl oder anderen Rückständenverunreinigte Abwasser one Wasserrückgewinnungseinrichtung zu entsorgen, wird dieses in Schlammauffangbecken angesammelt, um sodann über einen Ölabscheider einem Kanal zugeführt zu werden. Es ist ein unerwünscht hoher Wasserverbrauch gegeben, wenn das benutzte Wasser nicht wiederverwendet wird.

Aus der DE 40 40 007 A1 ist eine Selbstbedienungs-Autowaschanlage bekannt, bei der anfallendes Abwasser sowohl mittels mechanischer Einrichtungen als auch chemischer Mittel wie Flockungsmittel gereinigt wird. Das zu reinigende Abwasser durchströmt dabei recht voluminöse Becken.

Bei einem Verfahren zur Reinigung von Abwasser von Auto-Waschanlagen nach der EP 0 436 090 A1 wird gereinigtes Wasser mit reinigungsaktiven Substanzen wie Flockungsmitteln und Luft vermischt.

Bei dem aus der WO 94/01368 bekannten Verfahren zum Reinigen von in PKW-Waschanlagen anfallendem Abwasser wird dieses mittels Unterdruck durch Reinigungsstufen gefördert, wobei ohne chemischen Zusatz eine hinreichende Reinigung des Abwassers erfolgt, das gegebenenfalls einer UV-Strahlung ausgesetzt wird.

Der vorliegenden Erfindung liegt das Problem zugrunde, eine Anordnung der zuvor beschriebenen Art so weiterzubilden, dass mit konstruktiv einfachen Maßnahmen und bei kompakter Bauart eine Reinigung von Abwasser erfolgen kann, wobei insbesondere auch ein selbstregulierender Prozess in Bezug auf die Abwasserreinigung durchführbar sein soll. Insbesondere soll auch die Möglichkeit gegeben werden, große Wassermengen an Brauchwasser zur Verfügung zu stellen. Auch soll das Abscheiden von Schmutz überaus effektiv sein.

Erfindungsgemäß wird das Problem u.a. durch eine Anordnung der eingangs genannten Art dadurch gelöst, dass das erste Förderaggregat oder eine Ansaugstelle dieses im Bodenbereich des ersten Behälters angeordnet ist, dass von dem ersten Förderaggregat eine zu der ersten Reinigungseinrichtung führende erste Leitung ausgeht, von der zumindest vorgereinigtes Abwasser in den zweiten Behälter gelangt, dass von dem Zweiten Behälter vorzugsweise eine zweite in den Bodenbereich des ersten Behälters führende Leitung ausgeht, dass von dem zweiten Behälter eine dritte zu dem Verbraucher führende Leitung und/oder von dem ersten Behälter eine vierte Leitung ausgeht, die in einem eine zweite Reinigungseinrichtung aufweisenden Kreislauf mündet, wobei von der zweiten Reinigungseinrichtung eine gereinigtes Abwasser abführende fünfte Leitung ausgeht und zu dem Verbraucher führt. Dabei ist der erste Behälter mit einer Mindestmenge an Abwasser und/oder zumindest vorgereinigtem und/oder gereinigtem Abwasser derart gefüllt, dass ein Absaugen von auf dem in dem ersten Behälter vorhandenen Abwasser angesammelten Schmutzstoffen durch das erste Förderaggregat unterbleibt.

Erfindungsgemäß wird eine Anordnung zum Reinigen von Abwasser insbesondere von PKW-Waschanlagen stammend vorgeschlagen, bei dem der erste Behälter der vorzugsweise eine Schlammgang üblicher Waschanlagen ist, eine Mehrfachfunktion dahingehend ausübt, dass eine Schmutzwassersammlung, eine Ölabscheidung und eine Schmutzwasseraufbereitung erfolgt. Die Schmutzwassersammlung erfolgt dadurch, dass das von dem Verbraucher wie Waschanlage anfallende Abwasser unmittelbar in den ersten Behälter eingeleitet wird. Da in dem ersten Behälter eine Mindestmenge von Abwasser ansteht, können leichtere Schmutzstoffe wie insbesondere Öl oder Benzin an der Oberfläche abgeschieden werden. Diese leichteren Schmutzstoffe werden jedoch nicht von dem vorzugsweise als Schlammpumpe wie Kreiselpumpe ausgebildeten Förderaggregat angesaugt, da sich dieses bzw. dessen Ansaugstelle im Bodenbereich des ersten Behälters befindet. Die Schmutzpumpe fördert dabei in einem Umfang, dass - wie erfindungsgemäß vorgesehen - ein Mindestniveau in dem ersten Behälter nicht unterschritten wird. Hierdurch bedingt besteht die Möglichkeit, das Öl, Benzin und andere in der Dichte sich von Wasser unterscheidenden leichteren Medien an der Oberfläche abgeschieden werden. Damit diese nicht zur Schmutzpumpe gelangen, wird das die entsprechenden Medien enthaltende Schmutzwasser, das von dem Verbraucher kommt, im oberen Bereich des ersten Behälters eingeleitet, z.B. durch Überleiten über ein Blech, wodurch eine Beruhigung des Schmutzwassers gegeben ist.

Im Bodenbereich des ersten Behälters mündet des Weiteren die von dem zweiten Behälter ausgehende Leitung, in der zumindest vorgereinigtes Abwasser mit Ozon versetzt ist. Vorzugsweise mündet die entsprechende zweite Leitung tangential im Randbereich des ersten Behälters, also in etwa parallel zur Umfangsfläche. Hierdurch wird zum einen sichergestellt, dass eine Vermischung des Wassers in dem ersten Behälter nicht in einem Umfang erfolgen kann, dass die an der Oberfläche abgelagerten Stoffe bis in den Bodenbereich hinein verwirbelt werden. Zum anderen wird für das in dem Wasser vorhandene Ozon die Möglichkeit gegeben, im hinreichenden Unfang Schmutz abzubauen, wodurch die erforderliche Vorreinigung des Schmutzwassers erfolgt.

Das aus dem ersten Behälter entnommene Wasser wird über die zumindest eine Reinigungsstufe geleitet, bei der es sich vorzugsweise um ein mechanisches Filter, vorzugsweise ein Spaltsieb handelt. Von dem Spaltsieb gelangen die Schmutzstoffe in einen Behälter, um gegebenenfalls eine Nachtrocknung durchzführen. Gereinigtes Abwasser tropft durch das Spaltsieb in den zweiten Behälter.

Bei der ersten Reinigungseinrichtung handelt es sich bevorzugterweise um ein Spaltsieb, welches aus zueinander beabstandeten vorzugsweise im Schnitt dreieckförmigen Profilelementen wie -stäben besteht, deren Spitzen dem zweiten Behälter zugewandt sind. Dabei weist das Spaltsieb insbesondere eine im Schnitt einer Kurve wie Parabel oder Kreisbogen folgende Oberfläche derart auf, dass abgeschiedene Schmutzstoffe schwerkraftbedingt einer Aufnahme zuführbar sind.

Um ein Reinigen des Spaltsiebes zu ermöglichen, also gegebenenfalls in den Spalten abgelagerte Feststoffe entfernen zu können, ist vorgesehen, dass unterhalb des Spaltsiebs eine auf die Profilelemente ausgerichtete Sprüheinrichtung angeordnet ist. Dabei kann die Sprübeinrichtung entlang von der Reinigungseinrichtung aufgespannter Fläche verfahrbar und/oder verschwenkbar ausgebildet sein.

Es können bewegliche Sprührohre wie Sprühlanzen zum Einsatz gelangen. Alternativ besteht auch die Möglichkeit, die Sprüheinrichtung flächendeckend auszubilden, also als Einheit ausgebildet die Unterseite der mechanischen Reinigungseinrichtung zu besprühen.

Erfindungsgemäß werden gegebenenfalls auftretende Ablagerungen vollständig dadurch entfernt, dass die Unterseite der Reinigungseinrichtung besprüht bzw. bespritzt wird, wodurch sichergestellt ist, dass die Schmutzstoffe entlang der Oberfläche zum Aufnahmeort gefördert werden. Dabei ist es nicht erforderlich, dass der normale Filtrationsbetrieb unterbrochen wird. Auch erfolgt eine Beeinträchtigung der Qualität des gereinigten Abwassers nicht. Ursächlich hierfür ist, dass der Reinigungs-, d. h. der Spülvorgang vorzugsweise in Abstand von einigen Minuten durchgeführt wird, so dass sich der von der Reinigungseinrichtungsunterseite abgelöste Schmutz auf wenige mikroskopische Partikel beschränkt, die zu einer Beeinträchtigung des gereinigten Abwassers nicht führen, gleichwenn die Partikel als Schmutzablagerung Keimzellen für einen unerwünschten Belag an der Reinigungseinrichtung selbst bilden können.

Um sicherzustellen, dass Schmutzpartikel nicht unkontrolliert in dem die Reinigungseinrichtung umgebenden Raum versprüht werden, sieht eine Weiterbildung der Erfindung vor, dass beabstandet zur behälterabgewandten Fläche der Reinigungseinrichtung eine Abdeckung verläuft, die als Spritzschutz ausgebildet sein kann.

Die Sprüheinrichtung selbst kann mit dem Behälter zum Versorgen der Sprüheinrichtung mit gereinigtem Abwasser verbunden sein. Alternativ oder ergänzend kann die Sprüheinrichtung auch mit einem Frischwasseranschluss verbunden sein.

In einer weiteren hervorzuhebenden eigenerfinderischen Ausgestaltung der Erfindung wird dem Verbraucher wie einer PKW-Reinigungsanlage Brauchwasser von der zweiten als Spaltrohr ausgebildeten Reinigungseinrichtung zugeführt, welches ein einen mit den Verbraucher verbundenen Innenraum umgebendes aus gewickeltem Draht wie Dreikantdraht bestehendes Flüssigkeit durchlassendes Innenrohr und ein dieses umgebendes umfangseitig geschlossenes Außenrohr aufweist, wobei zwischen Innen- und Außenrohr vorhandener Ringraum mit dem Kreislauf verbunden ist, der von dem ersten Behälter, also insbesondere dem Schlammfang gespeist wird.

Zum Reinigen des Spaltrohrs ist des Weiteren vorgesehen, dass der Innenraum des Innenrohrs insbesondere impulsartig mit Druckluft beaufschlagt wird Alternativ kann in kurzen Zeitabständen eine Rückspülung mit Flüssigkeit erfolgen.

Um sicherzustellen, dass in Abhängigkeit von der Menge des dem Verbraucher zugeführten gereinigten Wassers der Kreislauf mit Flüssigkeit aufgefüllt wird, befindet sich in der zu dem Kreislauf führenden Leitung ein zweites Förderaggregat, dessen Ansaugseite bzw. Ansaugstelle ebenfalls im Bodenbereich des ersten Behälters verläuft. Über eine weitere Leitung wird kontinuierlich oder diskontinuierlich ein Teilstrom aus dem Kreislauf in den Schlammfang zurückgeführt. Damit wird sichergestellt, dass sich der ausfiltrierte Schmutz nicht anreichert.

Des Weiteren ist vorgesehen, dass die Anordnung zumindest eine Ozoneinrichtung aufweist, die mit der von dem zweiten zu dem ersten Behälter führenden zweiten Leitung verbunden ist.

Somit ist zum Abbau von Kohlenwasserstoffen und zur Unterbindung von biologischen Prozessen sichergestellt, dass dem ersten Behälter, also dem Schlammfang in hinreichendem Umfang Ozon beigemischt wird.

Die Abstimmung des Ozongehalts des zu dem ersten Behälter geleiteten Wassers muss dergestalt sein, dass das Ozon vollständig vor der Reinigungsstufe abgebaut ist, von der Wasser dem Verbraucher zugeführt wird, um weitere Reaktionen mit Abwasser zu unterbinden, wodurch andernfalls eine Flockenbildung im aufbereiteten Wasser und unter Umständen auch Korrosion oder sonstige Beschädigungen an nachfolgenden Einrichtungen erfolgen würde.

Um auszuschließen, dass Ozon in den vorgereinigtes Wasser aufnehmenden zweiten Behälter gelangt, kann in der zu der Reinigungsstufe führenden ersten Leitung eine UV-Lichtquelle vorgesehen sein. Beispielsweise kann die erste Leitung mit einer UV-Lichtquelle beaufschlagt sein, wodurch das noch vorhandene Ozon vernichtet wird.

Der erste Behälter sollte derart ausgelegt und das Fördermittel wie Schmutzpumpe so geregelt werden, dass sich innerhalb des ersten Behälters Niveauschwankungen von vorzugsweise maximal zwischen 10 und 25% ergeben. Hierdurch ist sichergestellt, dass sich die gegenüber dem Abwasser leichteren Stoffe im hinreichenden Umfang an der Oberfläche abscheiden können und von der Schmutzpumpe selbst nicht äbgesaugt werden, wodurch andernfalls die Gefahr bestünde, dass eine Emulsion entsteht.

Die Anreicherung des in dem ersten Behälter angesammelten Abwassers mit Ozon bewirkt nicht nur den Abbau des normalen Schmutzes, sondern auch den Abbau des an der Oberfläche angesammelten Öls und Benzins, und zwar dann, wenn nicht oder nur im geringen Umfang von dem Verbraucher stammendes Abwasser in den ersten Behälter fließt. Insbesondere nachts, wem der Verbraucher nicht in Betrieb ist, kann ein Abbau von Öl, Benzin oder ähnlichem dadurch erfolgen, dass in einem geschlossenen Kreislauf Schmutzwasser über die erste Reinigungsstufe dem zweiten Behälter zugeführt und von diesem zu dem ersten Behälter strömt, wobei im erforderlichen Umfang Ozon beigegeben wird. Hierdurch erfolgt quasi ein selbstregulierender Prozess in Bezug auf den Ozonabbau und den hiermit einhergehenden Abbau von Schmutz und Öl.

Vorteil der erfindungsgemäßen Anordnung ist es, dass keine Fäulnis entsteht und dass auch keine Geruchsbildung auftritt, da im ersten Behälter keine Sedimentation erfolgt; dem die gegebenenfalls auftretenden Schmutzablagerungen werden entweder aufgewirbelt oder fortwährend von dem Förderaggregat wie Schlammpumpe abgesaugt. Die erfindungsgemäße Anordnung ermöglicht demzufolge keine anaerobe oder aerobe Zersetzung organischer Bestandteile.

Sollten dennoch Sedimentationen auftreten, so können diese durch Einleiten des gegebenenfalls mit Ozon angereicherten vorgereinigten Abwassers bzw. durch die Schlammpumpe selbst aufgewirbelt bzw. abgebaut werden. Hierzu befindet sich die Schlammpumpe mit ihrem Ansaugstutzen vorzugsweise in der Senke des ersten Behälters, der bodenseitig trichterförmig ausgebildet sein kann.

Zu erwähnen ist noch, dass gegebenenfalls anstelle einer einstufigen Filtration auch eine zweistufige Filterung möglich ist, wobei dem mechanischen Filter, das als Bogensieb ausgeführt werden kann, eine Filterstufe nachgeschaltet sein sollte.

Die erfindungsgemäße Anordnung zeichnet sich im Wesentlichen dadurch aus, dass eine Schmutzpumpe im Bodenbereich des ersten Behälters wie Schlammfang angeordnet ist oder dessen Ansaugstelle im Bodenbereicht verläuft, dass ein Abpumpen von Abwasser vor Ablagerungen von Schmutzstoffen erfolgt, dass in dem ersten Behälter ein Mindestflüssigkeitsinhalt zum Abscheiden von in Bezug auf Wasser leichtere Stoffe an der Oberfläche möglich ist, ohne dass diese von der Schmutzpumpe abgesaugt werden und dass ein Einführen von ozonhaltigem gesäuberten Wasser in den Bodenbereieh des ersten Behälters erfolgt, wodurch einerseits gegebenenfalls abgelagerte Stoffe aufgewirbelt und zum anderen sowohl Schmutzanteile im Abwasser abgebaut als auch insbesondere bei Nachtbetrieb Öl und Benzin an der Oberfläche abgebaut werden.

Dabei ist insbesondere durch die Verwendung des Spaltrohrs sichergestellt, dass bei einer kompakten Bauweise in hinreichendem Umfang Wasser dem Verbraucher zugeführt werden kann. Durch die Ausbildung des Spaltrohres in z. B. einer Länge von 0,5 bis 3 m und einem Innendurchmesser des Außenrohres von z. B. ca. 60 -270 mm, einem Außendurchmesser des Innenrohrs von ca 50 - 250 mm, einem entlang der Umfangsfläche des Innenrohrs und parallel zu dessen Längsrichtung verlaufenden Kante des Dreikantdrahtes mit einer Kantenlänge von ca 1 mm und einer Spaltbreite von 30 µm problemlos Brauchwasser in einer Menge von 50 m³ pro Stunde und mehr abgeleitet werden, wobei der Durchsatz durch das Spaltrohr selbst vorrugsweise 5 bis 30 mal größer, insbesondere 10 bis 20 mal größer ist.

Das durch das Spaltrohr, also den Ringraum zwischen Innen- und Außenrohr strömende Wasser ist dabei einer so starken Querströmung (Cross-Flow) ausgesetzt, dass ein Zusetzen des auf einer Schraubenlinie liegenden Spaltes des Innenrohrs weitgehend ausgeschlossen wird. Durch die impulsartigen Reinigungsintervalle vom Innenraum des Innenrohrs aus, insbesondere durch Druckluftimpulse, wird des Weiteren sichergestellt, dass der Spalt des Innenrohrs zum Durchströmen von Wasser frei ist Gleichzeitig ist jedoch sichergestellt, dass im hinreichenden Umfang ein Abscheiden von Schmutzstoffen aus dem Abwasser erfolgt, dieses demzufolge nicht zu dem Verbraucher gelangen kann, so dass erwähntermaßen sehr große Brauchwassermengen bei kleinem Platzbedarf und größere Filterfeinheit als bei üblichen nur eine Filterstufe aufweisenden Anordnungen zur Verfügung gestellt wird.

Der eigentliche Schmutzaustrag aus der Anordnung erfolgt in dem den zweiten Behälter einschließenden zweiten Kreislauf, also durch Abscheiden der Schmutzstoffe auf der Oberfläche des Spaltsiebes. Schwebstoffe, Öle etc. selbst werden in gewohnter Weise von der Oberfläche des ersten Behälters mittels Überschusswasser entfernt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Prinzipdarstellung einer ersten Ausführungsfrom einer Anordnung zur Aufbereitung von Abwasser,
- Fig. 2: eine Prinzpdarstellung einer zweiten Ausführungsform einer Anordnung zur Aufbereitung von Abwasser,
- Fig. 3: eine Detaildarstellung einer ersten mechanischen Reinigungseinrichtung der Fig. 1 und 2,
- Fig. 4: eine Prinzipdarstellung einer zweiten mechanischen Reinigungseinrichtung der Fig. 2 und
- Fig. 5: ein Ausschnitt der Reinigungseinrichtung nach Fig. 4.

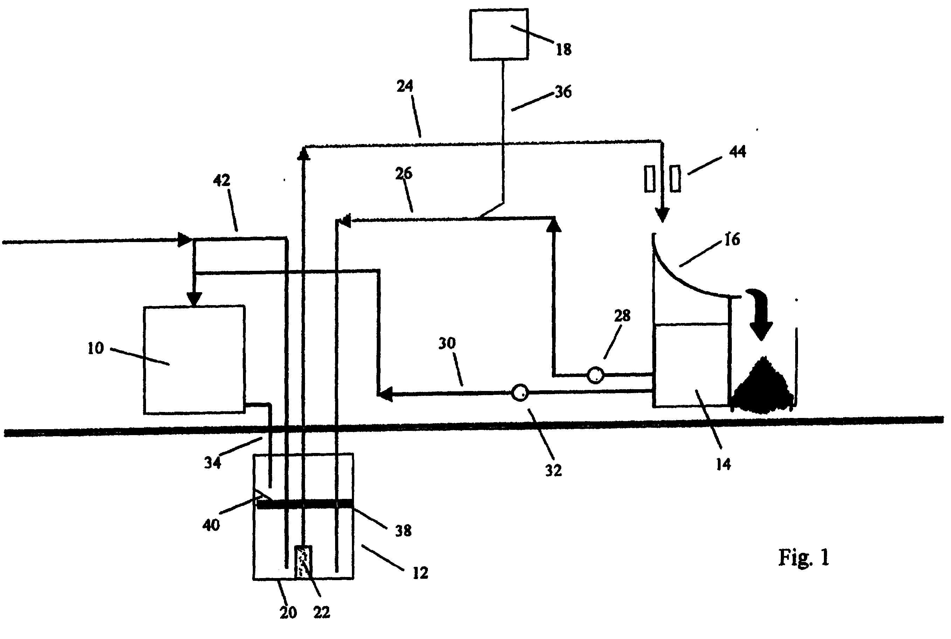

In Fig. 1 ist eine Prinzipdarstellung einer Anordnung zur Aufbereitung von insbesondere von einer Pkw-Waschanlage 10 stammendem Abwasser dargestellt. Wesentliche Bestandteile der Anordnung sind ein erster Behälter 12 in Form von vorzugsweise einem Schlammfang, ein zweiter Behälter 14, der zumindest vorgereinigtes Abwasser aufnimmt, eine dem zweiten Behälter 14 vorgeordnete einstufige Filterstufe in Form eines Spaltsiebes 16 sowie ein Ozongenerator 18. Des Weiteren ist im Bodenbereich 20 des ersten Behälters 12, der nachstehend aus Gründen der Vereinfachung als Schlammfang bezeichnet wird, ein erstes Förderaggregat 22 vorzugsweise in Form einer als Kreiselpumpe ausgebildeten Schmutzpumpe 22 angeordnet. Der Ansaugstutzen der Schmutzpumpe 22 befindet sich unmittelbar im Bodenbereich 20. Gegebenenfalls kann der Boden des Schlammfangs 12 trichterförmig ausgebildet sein, um den Ansaugstutzen der Pumpe 22 tatsächlich von der Senke ausgehen zu lasen.

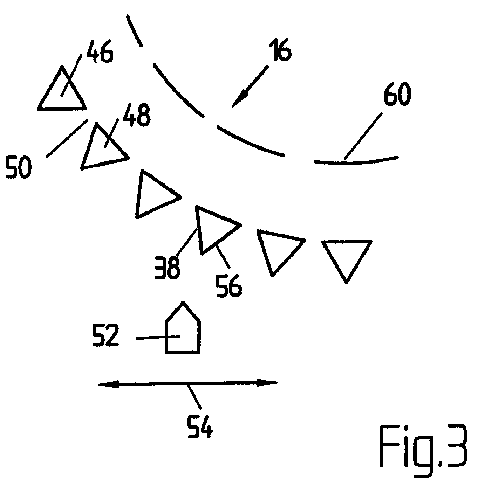

Von der Pumpe 22 führt eine erste Leitung 24 zu der als Spaltsieb ausgebildeten Filterstufe 16, unterhalb der der zweite Behälter 14 angeordnet ist. Da Spaltsieb 16 ist derart ausgelegt, dass gereinigtes Abwasser in den Behälter 14 gelaugt, wohingegen die Schmutzstoffe entlang der vorzugsweise einen bogenförmigen Verlauf aufweisenden Oberfläche zu einer Aufnahme wie Container gelangen, um die Schmutzstoffe abtransportieren und gegebenenfalls trocknen zu können. Nähere Einzelheiten des Spaltsiebs 16 werden im Zusammenhang mit der Fig. 3 beschrieben.

Von dem das gereinigte Abwasser aufnehmenden zweiten Behälter 14 fürht eine zweite Leitung 26 zurück zu dem Schlammfang 12. Hierzu ist in der Leitung 26 ein zweites Förderaggregat 28 angeordnet. Ferner geht von dem zweiten Behälter 14 eine dritte Leitung 30 aus, die zu der Waschanlage 10 führt. In der Leitung 30 befindet sich ein Pumpenaggregat 32 zur erforderlichen Druckerhöhung.

Von der Waschanlage 10 führt eine weitere Leitung 34 zu dem Schlammfang 12. Schließlich ist der Ozongenerator 18 über eine Leitung 36 mit der zweiten von dem zweiten Behälter 14 zu dem Schlammfang 12 führenden Leitung 26 verbunden.

Wie die Prinzipdarstellung verdeutlicht, ist nicht nur die Schmutzpumpe 22 ausgangsseitig im Bodenbereich 20 des Schlammfangs 12 angeordnet, sondern auch die mit dem Ozongenerator 18 in Verbindung stehende zweite Leitung 26 mündet im Bodenbereich 20. Dabei sollte das gegebenenfalls mit Ozon angereicherte Abwasser vorzugsweise peripher und entlang der Umfangswandung des Schlammfangs 12 eingeleitet werden. Somit hat das Ozon hinreichend die Zeit, um in dem Schlammfang 12 angesammeltes Abwasser aufzubereiten oder - wie nachstehend beschrieben - auf der in dem Schlammfang 12 angesammelten Flüssigkeit angesammelte leichtere Schmutzstoffe wie Öl und Benzin abzubauen. Eine entsprechende Schmutzschicht ist in der Zeichnung mit dem Bezugszeichen 38 versehen.

Die das Abwasser von der Waschanlage 10 in den Schlammfang 12 führende Leitung 34 endet oberhalb oder knapp unterhalb der Flüssigkeitsoberfläche 38. Dabei können Leitbleche 40 vorgesehen sein, um das einströmende Wasser zu beruhigen. Ferner besteht die Möglichkeit, dass dem Schlammfang 12 Frischwasser über eine Leitung 42 zugeführt wird. Dabei endet die Leitung 42 vorzugsweise auch im Bodenbereich 20 des Schlammfangs 12.

Schließlich kann eine UV-Strahlungsquelle 44 vorgesehen werden, um das die Leitung 24 durchströmende Abwasser mit UV-Licht zu beaufschlagen, um in diesem eventuell noch vorhandenes Ozon zu vernichten.

Die in Fig. 1 mit dem Bezugszeichen 16 gekennzeichnete mechanische Reinigungseinrichtung in Form eines Spaltsiebs 16 ist in Fig. 3 im Ausschnitt vergrößert dargestellt. Die mechanisch Reinigungseinrichtung 16 umfasst zueinander beabstandete im Schnitt dreieckförmige Profilelemente 46, 48, zwischen denen Spalte 50 verlaufen. Die Profilelemente 46, 48 sind derart angeordnet, dass deren Spitzen oberflächenabgewandt, also in Richtung des Behälters 14 verlaufen.

Behälterseitig, also entlang der Unterseite des Spaltsiebs 16 ist eine Sprüheinrichtung 52 angeordnet, die entlang der Unterseite des Spaltsiebs 16 verfahrbar (Doppelpfeil 54) oder verschwenkbar ist, um von der Sprüheinrichtung 42 abzugebende Flüssigkeit auf die Spalte 50 auszurichten, wodurch sichergestellt ist, dass in diesem Bereich vorhandene Schmutzablagerungen oder solche im Bereich der unterseitigen Schenkel 56, 58 der Profilelemente 46, 48 entfernt werden.

Die Sprüheinrichtung 52, bei der es sich um Sprühlanzen oder Sprührohre handeln kann, - aber auch eine flächendeckende Sprüheinrichtung, die sich nahezu vollständig entlang der Unterseite der Reinigungseinrichtung 16 erstreckt, ist denkbar -, kann mit aus dem Behälter 14 entnommenem Wasser versorgt werden. Alternativ oder ergänzend besteht auch die Möglichkeit, die Sprüheinrichtung 52 mit einem Frischwasseranschluss zu verbinden.

Die Anordnung nach Fig. 1 selbst arbeitet nun wie folgt. Verschmutztes Wasser strömt über die Leitung 34 in den Schlammfang 12. Dabei ist darauf zu achten, dass in dem Schlammfang 12 eine Mindestmenge an Flüssigkeit angesammelt ist, damit über die Schlammpumpe 22 keine sich an der Flüssigkeitsoberfläche 38 ablagernden Stoffe angesaugt werden können; denn in dem Fall, dass von der Pumpe 22 Öl bzw. Benzin und Wasser gefördert würden, ergäbe sich im Behälter 14 eine Emulsion, so dass eine Weiterverwendung des gereinigten Wassers für die Waschanlage 10 nicht in Frage käme. Die Niveauregulierung in dem Schlammfang 12, also die Flüssigkeitsoberfläche 38 sollte derart erfolgen, dass Niveauunterschiede von maximal 10 bis 25 % aufreten.

In den Bodenbereich 20 des Schlammfangs 12 wird von dem gereinigtes Abwasser aufnehmenden Behälter 14 mit Ozon angereichertes Wasser über die Leitung 26 eingeleitet. Dabei erfolgt im Bodenbereich 20 eine intensive Durchmischung von dem Abwasser mit dem ozonhaltigen Wasser derart, dass die organischen Bestandteile oxidiert, also abgebaut werden können. Eventuell enthaltendes überschüssiges Öl bzw. Benzin scheidet sich aufgrund des Dichteunterschiedes zum Wasser im Bereich der Oberfläche 38 ab und kann ebenfalls durch Ozoneintrag nach und nach abgebaut werden. Dies kann insbesondere dann erfolgen, wenn die Waschanlage 10 außer Betrieb ist und Flüssigkeit im Kreislauf über die Pumpe 22, die erste Leitung 24, den Behälter 14 sowie die mit dem Ozongenerator 18 verbundene Leitung 26 im Kreislauf strömt.

Dadurch, dass von der Förderpumpe 22 Öl bzw. Benzin mit dem Abwasser nicht gefördert wird, wird eine Emulsionsbildung ausgeschlossen. Somit kann über die Leitung 30 gereinigtes Abwasser, welches von dem Behälter 14 stammt, der Waschanlage 10 wieder zugeführt werden.

Das in dem Schlammfang 12 vorbehandelte Wasser wird erwähntermaßen im tiefsten Punkt entnommen, wobei stets sichergestellt ist, dass hinreichend Flüssigkeit in dem Schlammfang 12 vorhanden ist, um einerseits die Wirksamkeit als Ölabscheider sicherzustellen, und andererseits ein Absetzen von Schlamm am Grund zu verhindern. Somit ist die Bildung von Faulschlamm ausgeschlossen.

Um sicherzustellen, dass der Filtrationsanlage 16 vorzugsweise in Form des Spaltfilters ein mit Ozon angereichertes Wasser nicht zugeführt wird, kann vor dem Auslass der Leitung 24 die UV-Strahlungsquelle 44 angeordnet werden, so dass noch vorhandenes Ozon aufgrund des UV-Lichtes zerstört werden kann. Hierzu kann die Leitung 24 einen transparenten Abschnitt aufweisen, der von UV-Lichtquellen umgeben ist.

Um gegebenenfalls im Bereich der Spalte 50 oder an den Unterseiten der Profilelemente 46, 48, also deren Schenkeln 56, 58 abgelagerte Schmutzstoffe zu entfernen, wird im Abstand von einigen Minuten die Sprüheinrichtung 52 mit Flüssigkeit beaufschlagt, um die Spalte 50 bzw. die Schenkel 56, 58 zu reinigen. Aufgrund des kurzen Abstandes der Reinigungsvorgänge ist sichergestellt, dass an der Unterseite bzw. im Spalt 50 der Reinigungseinrichtung 16 abgelagerte milkroskopisch kleine Partikel zu einer Beeinträchtigung der Qualität des in dem Behälter 14 angesammelten gereinigten Abwasser nicht führen können.

Um auszuschließen, dass Reinigungsflüssigkeit unkontrolliert von der Oberseite des Spaltsiebs 16 heraustritt, kann oberhalb des Spaltsiebs 16 eine Abdeckung 60 wie Spritzschutz angeordnet sein.

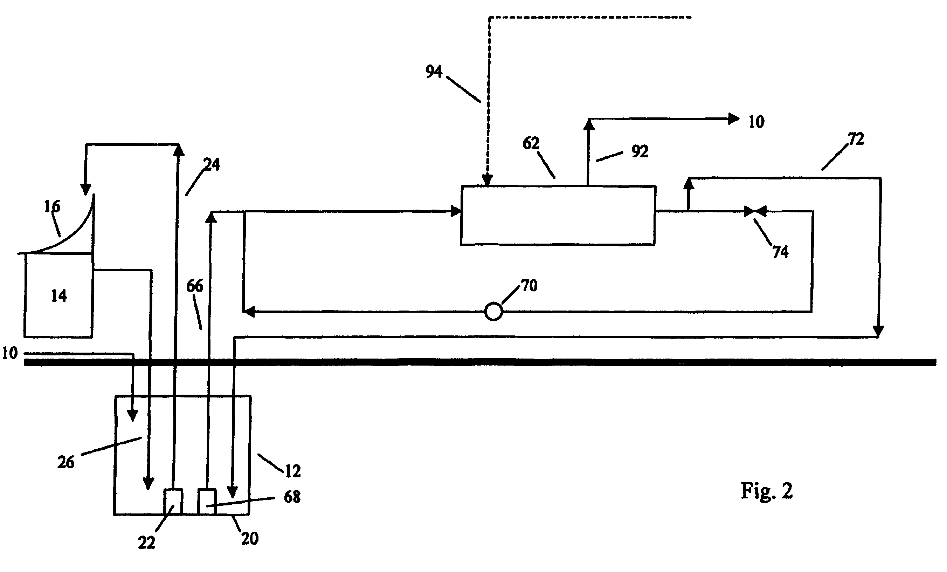

Der Fig. 2 ist eine besonders bevorzugte weitere Ausführungsform einer Anordnung zur Aufbereitung von insbesondere von einer PKW-Waschanlage stammendem Abwasser zu entnehmen, wobei Elemente, die in Fig. 1 benutzt worden sind, gleiche Bezugszeichen aufweisen. Auch gelten weitgehend die Verfahrensschritte gemäß Fig. 1 mit Einschränkung für das abzuführende Brauchwasser.

Wird nach dem Ausführungsbeispiel der Fig. 1 das in dem zweiten Behälter 14 gesammelte Abwasser dem Verbraucher wie PKW-Waschanlage 10 zugeführt, so ist nach Fig. 2 vorgesehen, dass das aufbereitete Abwasser einem Spaltrohr 62 als zweite Reinigungsstufe entnommen wird, welches in einem Kreislauf 64 angeordnet ist, der über eine Leitung 66, die als vierte Leitung bezeichnet wird, aus dem Schlammfang 12 mit Wasser versorgt wird. Hierzu befindet sich im Bodenbereich 20 des Schlammfangs 12 ein weiteres Förderaggregat 68. Alternativ kann - wie in Zusammenhang mit der Fig. 1 erläutert - das Aggregat 68 auch außerhalb des Schlammfangs 12 angeordnet sein, wobei jedoch die Ansaugstelle im Bodenbereich 22 mündet. Der das Spaltrohr 62 enthaltende Kreislauf 64 weist seinerseits ein weiteres Förderaggregat 70 auf, damit Flüssigkeit mit erforderlicher Geschwindigkeit und Derchsatz das Spaltrohr 62 durchströmt.

Strömungsmäßig geht von dem Kreislauf 64 hinter dem Spaltrohr 62 eine Abzweigung 72 aus, die im Bodenbereich 20 des Schlammfangs 12 mündet. Damit die Abzweigung 72 von Flüssigkeit durchströmt wird, kann ein hinter der Abzweigung aus dem Kreislauf 64 angeordnetes Drosselorgan 74 im Kreislauf 64 vorgesehen werden. Da Drosselorgan (74) dient der Einstellung der Druckverhältnisse im Spaltrohr und in der Leitung (72).

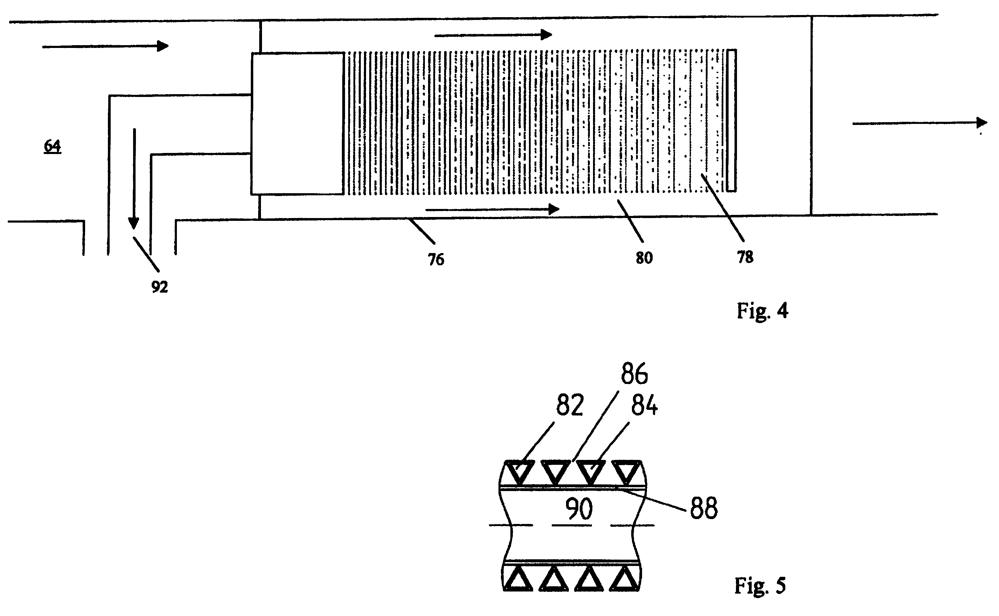

Der prinzipielle Aufbau des Spaltrohrs 62 ist den Fig. 4 und 5 zu entnehmen. Das Spaltrohr 62 besteht aus einem Außenrohr 76, innerhalb dessen und koaxial zu diesem ein Innenrohr 78 angeordnet ist, so dass sich zwischen Innen- und Außenrohr ein Ringraum 80 ausbildet, der von von dem Kreislauf 74 kommender Flüssigkeit durchströmt wird.

Das Innenrohr 78 besteht aus einem gewickelten Dreikantdraht 82 mit einem Querschnitt eines gleichschenkligen Dreiecks, wobei die Kantenlängen 84 vorzugsweise ca. 1 mm und der Abstand zwischen nebeneinanderliegenden Abschnitten des Drahts 82 also der Spalte 86 eine Breite von in etwa 30 µm aufweist. Die Spitze des Drahts 82 zeigt zur Achse des Innenrohrs 78.

Der Dreikantdraht 82 ist auf in Längsrichtung verlaufenden Stäben 88 gewickelt und mit diesen verschweißt.

Das Spaltrohr 62, insbesondere das Innenrohr 78 kann eine Länge von 0,5 bis 3 m aufweisen. Der Innendurchmesser des Außenrohrs 76 kann z.B. ca 60-270 mm und der Außendurchmesser des Innenrohrs 78 ca. 50-250 mm betragen.

Die in den Ringraum 80 gelangende Flüssigkeit erfährt aufgrund der Ausbildung des Spaltrohres und dessen Dimensionierung eine starke Querströmung (Cross-Flow) derart, dass sich die Spalten 86 im Wesentlichen nicht zusetzen. Es erfolgt in hinreichendem Umfang ein Abscheiden von Feststoffen derart, dass in den Innenraum 90 des Innenrohres 78 gelangende Flüssigkeit überaus sauber ist, so dass dieses über eine Leitung 92 dem Verbraucher 10 zugeführt werden kann.

Zusätzlich mündet in dem Innenraum 90 des Innenrohrs 78 eine Druckluftleitung 94, um durch eine impulsartige Druckluftinjektion gegebenenfalls in den Spalten 86 vorhandene Ablagerungen zu entfernen. Alternativ kann Wasser von dem Innenraum 90 in Richtung des Ringraums 80 gedrückt werden, wodurch ebenfalls eine Reinigung erfolgt.

Der eigentliche Schmutzaustrag aus dem System erfolgt jedoch über die erste Reinigungseinrichtung wie dem Spaltsieb 16, so dass insoweit auf die Ausführengen zu der Fig. 1 verwiesen wird.

Entsprechend der Leitung 24, die von dem Schlammfang 12 zu dem Spaltsieb 16 führt, kann auch in der von dem Schlammfang 12 zu dem Kreislauf 64 führenden vierten Leitung 66 eine UV-Strahlungsquelle vorgesehen sein, um sicherzustellen, dass der jeweiligen Reinigungseinrichtung kein mit Ozon angereichertes Wasser zugeführt wird.

Mit der der Fig. 2 zu entnehmenden erfindungsgemäßen Anordnung können dem Spaltrohr 62 Brauchwassermengen von 50 m³ pro Stunde und mehr unter Berücksichtigung der zuvor angegebenen Dimensionierung des Spaltrohres 62 entnommen werden, wobei der Durchsatz durch das Innenrohr nur in etwa 5 bis 20 % der das Spaltrohr 62 durchsetzenden und den Kreislauf 64 durchströmenden Flüssigkeit entspricht. Mit anderen Worten können bei einer kompakten Bauweise große Brauchwassermengen zur Verfügung gestellt werden, wobei sich zusätzlich der Vorteil ergibt, dass das dem Verbraucher 10 zugeführte Brauchwasser nur Schmutzpartikel einer Größe von bis zu 20 mm enthält.

## Patentansprüche

1. Anordnung zum Reinigen von bei einem Verbraucher (10) wie insbesondere einer PKW-Waschanlage anfallendem Abwasser umfassend einen das Abwasser aufnehmenden ersten Behälter (12), zumindest einen gereinigtes bzw. vorgereinigtes Abwasser aufnehmenden zweiten Behälter (14), zumindest eine dem zweiten Behälter vorgeschaltete erste Reinigungseinrichtung (16) für das Abwasser, gegebenenfalls eine Einrichtung (18) zum Erzeugen von Ozon zum Behandeln von Abwasser sowie zumindest ein erstes Förderaggregat (22) zum Fördern des Abwassers, wobei das in dem zweiten Behälter (14) angesammelte gereinigte bzw. vorgereinigte Abwasser unmittelbar oder mittelbar dem Verbraucher wieder zuführbar ist,
**dadurch gekennzeichnet,**
dass das erste Förderaggregat (22) oder eine Ansaugstelle dieses im Bodenbereich (20) des ersten Behälters (12) angeordnet ist, dass von dem ersten Förderaggregat eine zu der Reinigungseinrichtung (16) führende erste Leitung (24) ausgeht, von der zumindest vorgereinigtes Abwasser in den zweiten Behälter (14) gelangt, dass von dem zweiten Behälter eine in den Bodenbereich des ersten Behälters führende zweite Leitung (26) ausgeht, dass von dem zweiten Behälter eine dritte zu dem Verbraucher (10) führende Leitung (30) und/oder von dem ersten Behälter eine vierte Leitung (66) ausgeht, die in einem eine zweite Reinigungseinrichtung (62) aufweisenden Kreislauf (64) mündet, wobei von der zweiten Reinigungseinrichtung eine gereinigtes Wasser abführende fünfte Leitung (92) zu dem Verbraucher (10) führt.

2. Anordnung nach Anspruch 1,
**dadurch gekennzeichnet**,
dass die erste Reinigungseinrichtung (16) ein Filter wie Spaltsieb und/oder die zweite Reinigungseinrichtung (62) ein Spaltrohr ist.

3. Anordnung nach Anspruch 2,
**dadurch gekennzeichnet**,
dass das Spaltrohr (62) aus einem mit der zu dem Verbraucher (10) führenden fünften Leitung (92) verbundenen Innenraum (90) umgebendes aus gewickeltem Draht wie Dreikantdraht (82) bestehendes flüssigkeitsdurchlässiges Innenrohr (78) und einem dieses umgebenden umfangsseitig geschlossenes Außenrohr (76) besteht, wobei zwischen Innen- und Außenrohr vorhandener Ringraum (80) mit dem Kreislauf (64) verbunden ist.

4. Anordnung nach zumindest einem der vorhergehenden Ansprüche,
**dadurch gekennzeichnet**,
dass unterhalb der ersten zueinander beabstandete vorzugsweise im Schnitt dreieckförmige Profilelemente wie -stäbe (46, 48) umfassenden ein Spaltsieb bildenden Reinigungseinrichtung (16) eine auf deren Profilelemente ausgerichtete Sprühreinrichtung angeordnet ist, die vorzugsweise entlang von der Reinigungseinrichtung aufgespannter Fläche verfahrbar und/oder verschwenkbar ausgebildet ist, und/oder dass das Innenrohr (78) des Spaltrohrs (62) von seinem Innenraum (90) her insbesondere impulsartig mit Druckluft und/oder Flüssigkeit beaufschlagbar ist.

5. Anordnung nach zumindest einem der vorhergehenden Ansprüche,
**dadurch gekennzeichnet**,
dass von dem ein Förderaggregat (70) aufweisenden Kreislauf (64) ein zu dem ersten Behälter (12) führender Abzweig (72) ausgeht.

6. Anordnung nach zumindest einem der vorhergehenden Ansprüche,
**dadurch gekennzeichnet,**
dass der erste Behälter (12) mit einer Mindestmenge an Abwasser und/oder zumindest vorgereinigtem Abwasser und/oder gereinigtem Abwasser derart gefüllt ist, dass ein Absaugen von auf dem in dem ersten Behälter vorhandenen Abwasser gesammelten Schmutzstoffen durch das erste Förderaggregat (22) unterbleibt.

7. Anordnung nach zumindest einem der vorhergehenden Ansprüche,
**dadurch gekennzeichnet**,
dass die den zweiten Behälter (14) mit dem ersten Behälter (12) verbindende zweite Leitung (26) mit der Ozon erzeugenden Einrichtung (18) verbindbar ist.

8. Anordnung nach zumindest einem der vorhergehenden Ansprüche,
**dadurch gekennzeichnet**,
dass der zu der ersten Reinigungseinrichtung (16) führenden ersten Leitung (24) und/oder der zu dem Kreislauf (64) führenden vierten Leitung und/oder dem Kreislauf eine jeweilige Leitung vorzugsweise ganz oder teilweise umgebende UV-Strahlungsquelle (44) zugeordnet ist.

9. Anordnung nach zumindest einem der vorhergehenden Ansprüche,
**dadurch gekennzeichnet**,
dass das von dem Verbraucher (10) kommende Abwasser oberhalb oder knapp unterhalb des Flüssigkeitsspiegels (38) in den ersten Behälter (12) insbesondere beruhigt einleitbar ist, wobei insbesondere der erste Behälter mit einer Schwankungsbreite von etwa ± 15 % mit Flüssigkeit gefüllt ist.

10. Anordnung nach zumindest einem der vorhergehenden Ansprüche,
**dadurch gekennzeichnet**,
dass der zwischen dem Außen- und Innenrohr (76, 78) des Spaltrohrs (62) vorhandene Ringraum (80) derart ausgebildet ist und/oder der Kreislauf (64) in diesen derart mündet, dass die den Ringraum durchströmende Flüssigkeit einer starken Querströmung ausgesetzt ist.

11. Anordnung nach zumindest einem der vorhergehenden Ansprüche,
**dadurch gekennzeichnet**,
dass das Innenrohr (78) einen von der Flüssigkeit durchströmten Spalt (86) einer Breite derart aufweist, dass 5 - 20 %, insbesondere 5 - 10 % der dem Spaltrohr (62) zugeführten Flüssigkeit über den Innenraum (90) des Innenrohrs (78) gelangende zu dem Verbraucher (10) strömen.

12. Anordnung nach zumindest einem der vorhergehenden Ansprüche,
**dadurch gekennzeichnet**,
dass in der zu dem Verbraucher (10) führenden fünften Leitung (92) ein Strömungswiderstand derart aufgebaut ist, dass zwischen Eintritt in den Innenraum (90) des Innenrohrs (78) und Austritt aus dem Innenraum eine Druckdifferenz von in etwa 0,05 bis 0,3 bar, insbesondere in etwa 0,1 bar herrscht.
